# EUROPEAN PATENT APPLICATION

(11) **EP 4 439 834 A1**
(43) Date of publication of application: **02.10.2024**
(21) Application number: 23769813.9
(22) Date of filing: 14.03.2023
(51) Int. Cl.: H01M 50/244, H01M 50/204, H01M 10/613

(54) **BATTERY TRAY ASSEMBLY, BATTERY PACK, AND VEHICLE**

(30) Priority: 14.03.2022 CN 202210249514
(71) Applicant: BYD Company Limited, Shenzhen, Guangdong 518118 (CN)
(72) Inventor: TANG, Jianglong, Shenzhen, Guangdong 518118 (CN); LI, Jianqiang, Shenzhen, Guangdong 518118 (CN); YANG, Shenglin, Shenzhen, Guangdong 518118 (CN); LIAO, Zhengyuan, Shenzhen, Guangdong 518118 (CN); MO, Kaizhi, Shenzhen, Guangdong 518118 (CN)
(74) Representative: Dehns Germany Partnerschaft mbB
(86) International application number: PCT/CN2023/081458
(87) International publication number: WO 2023/174311

(57) **Abstract**

A battery tray assembly (100), a battery pack, and a vehicle (1) are provided. The battery tray assembly (100) includes a tray (110) and an electrically conductive member (130). The tray (110) defines a mounting space (110a) configured to accommodate a battery assembly (200) and the tray (110) is electrically isolated from the battery assembly (200). The electrically conductive member (130) is provided in the tray (110) and at least partially located in the mounting space (110a). One end of the electrically conductive member (130) is configured to be connected to a preset potential point. When no electrically conductive medium is present in the mounting space (110a), the electrically conductive member (130) is configured to provide a first potential signal between the battery assembly (200) and the preset potential point. When the electrically conductive medium is present in the mounting space (110a), the electrically conductive member (130) brings the battery assembly and the preset potential point into conduction by means of the electrically conductive medium, to provide a second potential signal between the battery assembly (200) and the preset potential point. The first potential signal and the second potential signal are used to characterize whether the electrically conductive medium is present in the mounting space (110a).

## Description

### CROSS-REFERENCE TO RELATED APPLICATIONS

The present disclosure claims priority to Chinese Patent Application No. "2022102495145" filed by BYD Company Limited on March 14, 2022 and entitled "Battery tray assembly, battery pack, and vehicle, which is incorporated herein by reference in its entirety.

### FIELD

The present disclosure relates to the technical field of vehicles, and specifically to a battery tray assembly, a battery pack, and a vehicle.

### BACKGROUND

In related art, a tray of the battery pack is made of a composite material, which has good insulation similar to that of plastic, and can provide good insulation and protection during the operation of the battery pack. However, when water is infiltrated into the battery pack due to poor sealing of a pack body, an electrolyte solution in the battery leaks, or condensed water is formed in the pack body and accumulated in the tray, the existing electric leakage detector cannot detect whether an electrically conductive medium is present in the tray. If the battery assembly is immersed in the electrolyte solution or accumulated water in the tray for a long time, an aluminum casing of a battery cell will be electrolyzed, which seriously affects the battery life. Furthermore, the electrolysis of the aluminum casing to a certain extent will lead to perforation of the aluminum casing and thus leakage of the battery, which will lead to more serious safety accidents. Therefore, there is a need to detect whether the electrically conductive medium is present in the battery tray.

### SUMMARY

The present disclosure aims to solve at least one of the technical problems in related art. To this end, an object of the present disclosure is to provide a battery tray assembly. By providing an electrically conductive member in the battery tray assembly, a situation that the electrically conductive medium is comprised between the tray and the battery assembly is warned in time, so that a user can find out the problem in time, to avoid safety accidents.

The present disclosure further provides a battery pack having the battery tray assembly.

The present disclosure further provides a vehicle having the battery pack.

The battery tray assembly according to the present disclosure includes: a tray, where the tray defines a mounting space configured to accommodate a battery assembly and the tray is electrically isolated from the battery assembly; and an electrically conductive member, where the electrically conductive member is provided in the tray and at least partially located in the mounting space, and one end of the electrically conductive member is configured to be connected to a preset potential point. When no electrically conductive medium is present in the mounting space, the electrically conductive member is configured to provide a first potential signal between the battery assembly and the preset potential point. When the electrically conductive medium is present in the mounting space, the electrically conductive member brings the battery assembly and the preset potential point into conduction by means of the electrically conductive medium, to provide a second potential signal between the battery assembly and the preset potential point. The first potential signal and the second potential signal are used to characterize whether the electrically conductive medium is present in the mounting space.

By providing the electrically conductive member serving as an electrically conductive medium detection point in the battery tray assembly according to the present disclosure, when the electrically conductive medium is present in the tray, a battery assembly, the electrically conductive medium, the electrically conductive member and the preset potential point form a current conduction path. A battery management system can detect the change in potential difference between the battery assembly and the preset potential point in time, and report a potential signal representing the presence of the electrically conductive medium in the mounting space to the vehicle. The battery tray assembly can be used to find out the problem of electric leakage or water accumulation in the tray of the battery in time, thus providing a high safety.

The battery pack according to the present disclosure includes: a battery tray, where the battery tray is configured as a battery tray assembly according to the above embodiments; and a battery assembly, where the battery assembly is provided in the mounting space. When no electrically conductive medium is present in the mounting space, a first potential signal is formed between the battery assembly and the preset potential point. When the electrically conductive medium is present in the mounting space, a second potential signal is formed between the battery assembly and the preset potential point. The first potential signal and the second potential signal are used to characterize whether the electrically conductive medium is present in the mounting space. Since the battery pack of the present disclosure has the battery tray as described above, the battery pack can find out the electric leakage caused by water accumulation or electrolyte leakage in the battery in time, and has good safety performance.

The vehicle according to the present disclosure includes the battery pack according to the above embodiments. Since the vehicle according to the present disclosure is provided with the battery pack described in the above embodiment, the vehicle can give an alarm in case of a situation that the battery pack contains a leaked electrolyte solution or accumulated water, so that a user can find out the problem in time, to avoid safety accidents.

Additional aspects and advantages of the present disclosure will be partly given in the following description, some of which will become apparent from the following description, or may be learned from practices of the present disclosure.

### BRIEF DESCRIPTION OF THE DRAWINGS

FIG. 1 shows a principle that a battery tray assembly detects an electrically conductive medium according to an embodiment of the present disclosure.
FIG. 2 is an exploded view of a battery pack according to an embodiment of the present disclosure.
FIG. 3 shows the structure of a tray according to an embodiment of the present disclosure.
FIG. 4 shows a width scale of a cell core and an electrically conductive member according to an embodiment of the present disclosure.
FIG. 5 shows the fitting of an electrically conductive member and a tray according to an embodiment of the present disclosure.
FIG. 6 is a cross-sectional view of an electrically conductive fastener fitting an electrically conductive member to a lifting lug according to an embodiment of the present disclosure.
FIG. 7 is an enlarged view of a side frame according to an embodiment of the present disclosure.
FIG. 8 is a schematic view showing a vehicle according to an embodiment of the present disclosure.

### List of reference numerals:

100: battery tray assembly;
110 tray; 1 10a: mounting space; 111 bottom plate; 111a: supporting protrusion; 1111: bottom plate body; 1112: side plate; 1113: flanging portion; 112: side frame; 1120: side beam; 1121: outer supporting portion; 1121a: weight reducing cavity; 1122: inner supporting portion; 1122a: supporting groove; 1123: front beam; 1124: rear beam;
120: lifting lug; 130: electrically conductive member; 140: electrically conductive fastener;
200: battery assembly; 210 battery core; R0: insulating resistor; R1: electrically conductive medium resistor; R2: electrically conductive member resistor;
1: vehicle.

### DETAILED DESCRIPTION

Embodiments of the present disclosure are described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary and are only used to interpret the present disclosure, instead of limiting the present disclosure.

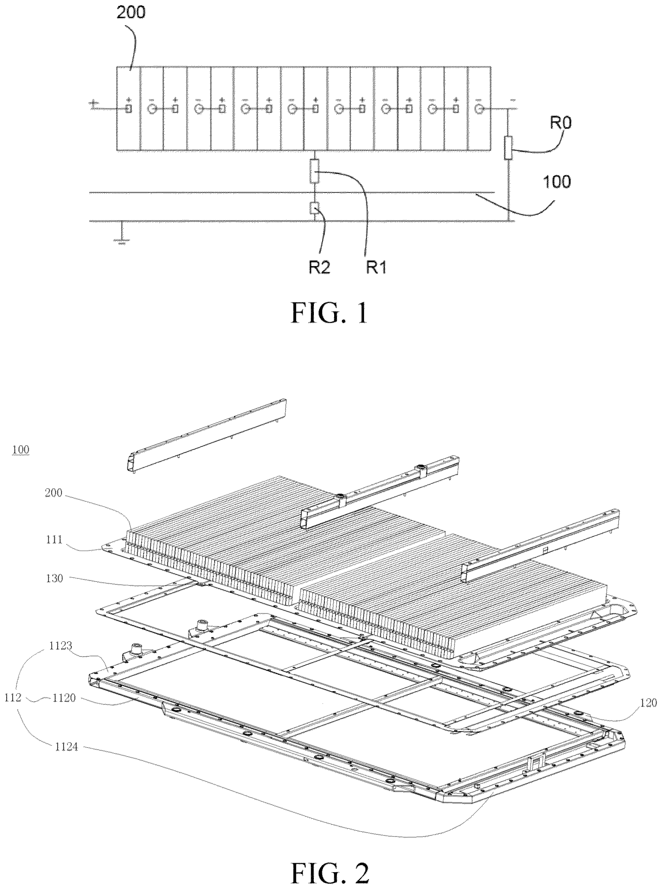

A battery tray assembly 100 according to an embodiment of the present disclosure will be described below with reference to FIGs. 1 to 7.

As shown in FIG. 2, the battery tray assembly 100 according to the present disclosure includes: a tray 110 and an electrically conductive member 130. The tray 110 defines a mounting space 110a configured to accommodate a battery assembly 200 and the tray 110 is electrically isolated from the battery assembly 200. The electrically conductive member 130 is provided in the tray 110 and at least partially located in the mounting space 110a. One end of the electrically conductive member 130 is configured to be connected to a preset potential point. When no electrically conductive medium is present in the mounting space 110a, the electrically conductive member 130 is configured to provide a first potential signal between the battery assembly 200 and the preset potential point. When the electrically conductive medium is present in the mounting space 110a, the electrically conductive member 130 brings the battery assembly 200 and the preset potential point into conduction by means of the electrically conductive medium, to provide a second potential signal between the battery assembly 200 and the preset potential point. The first potential signal and the second potential signal are used to characterize whether the electrically conductive medium is present in the mounting space 110a. It can be understood that the preset potential point is generally located outside the mounting space 110a. The electrically conductive member 130 is provided in the tray 110 and the electrically conductive member 130 can be entirely provided in the mounting space 110a. One end of the electrically conductive member 130 is connected to an additional electrically conductive structure, which can connect the electrically conductive member 130 to the preset potential point. Alternatively, the electrically conductive member 130 is provided in the tray 110 and a portion of the electrically conductive member 130 is provided in the mounting space 110a. The other portion of the electrically conductive member 130 extends outside of the mounting space 110a and is connected to the preset potential point, which is not limited in the present disclosure.

In some embodiments, the battery assembly 200 is provided on the tray 110, and the electrically conductive member 130 is also provided on the tray 110. The battery pack has a battery management system, which can detect a potential difference between the battery assembly 200 and the preset potential point. Since the electrically conductive member 130 is connected to the preset potential point, the electrically conductive member 130 has the same potential as the preset potential point. Accordingly, the battery management system can detect the potential difference between the battery assembly 200 and the electrically conductive member 130. The electrically conductive medium allows for the conduction of a current. When no electrically conductive medium is present in the mounting space 110a, the battery assembly 200 is disconnected from the electrically conductive member 130, the battery management system detects the potential difference between the battery assembly 200 and the electrically conductive member 130 that is the potential difference between the battery assembly 200 and the preset potential point. This potential difference is the potential difference when the battery is working normally. The battery management system converts the potential difference when the battery is working normally into the first potential signal. It can be understood that the first potential signal can be a voltage signal of the potential difference or a voltage signal of an insulating resistor provided in the battery pack. When the electrically conductive medium is present in the mounting space 110a, the electrically conductive medium is located between the battery assembly 200 and the tray 110. The battery assembly 200, the electrically conductive medium, the electrically conductive member 130 and the preset potential point form a current conduction path. At this time, the potential difference between the battery assembly 200 and the electrically conductive member 130 detected by the battery management system changes due to the presence of the electrically conductive medium. This potential difference is a potential difference when the battery has fault. The battery management system converts the potential difference changed when the battery has a fault into the second potential signal. By providing the electrically conductive member 130 in the battery pack with the battery management system, the potential difference between the battery assembly 200 and the preset potential point can be detected, so as to determine whether the electrically conductive medium is present in the battery pack.

In some other embodiments, to ensure that the battery pack has no electric leakage electricity under normal working conditions, the tray 110 should be electrically isolated from the battery assembly 200 to break the circuit. To detect the presence of the electrically conductive medium between the tray 110 and the battery assembly 200, the electrically conductive member 130 is provided on the insulating tray 110. When the electrically conductive medium is present between the tray 110 and the battery assembly 200, a current flows between the battery assembly 200 and the electrically conductive member 130, and a potential difference is formed between the battery assembly 200 and the preset potential point. The battery management system can detect the change of the potential difference and convert it into the second potential signal. When no electrically conductive medium is present between the tray 110 and the battery assembly 200, there will be the first potential signal between the battery assembly 200 and the preset potential point. The battery management system determines whether the electrically conductive medium is present in the tray 110 based on the change from the first potential signal to the second potential signal, and then reports relevant information to the vehicle, so as to warn the users and avoid safety accidents of the vehicle 1. It can be understood that the electrically conductive medium can be an electrolyte solution leaked from the battery pack, water infiltrated from the outside due to poor sealing of the pack body or condensed water generated inside the pack body. The accumulated water in the tray 110 contains electrically conductive positive and negative ions, or other media that can electrically connect the battery assembly 200 and the electrically conductive member 130.

By providing the electrically conductive member 130 serving as an electrically conductive medium detection point in the battery tray assembly 100 according to the present disclosure, when the electrically conductive medium is present in the tray 110, the battery assembly 200, the electrically conductive medium, the electrically conductive member 130 and the preset potential point form a current conduction path. The battery management system can detect the change in potential difference between the battery assembly 200 and the preset potential point in time, and report a potential signal representing the presence of the electrically conductive medium in the mounting space 110a to the vehicle. The battery tray assembly 100 can be used to find out the problem of electric leakage or water accumulation in the tray 110 of the battery in time, thus providing a high safety.

In some embodiments of the present disclosure, the electrically conductive member 130 is made of copper or aluminum, which is easy to process and has good electrical conductivity.

In some embodiments of the present disclosure, the preset potential point can be set at any position of the tray 110, as long as a potential difference can be formed between it and the battery assembly 200, so that the battery management system can detect the change of the potential difference. It can be understood that the preset potential point is generally located outside the mounting space 110a.

According to some embodiments of the present disclosure, the preset potential point is configured as a vehicle ground. In some embodiments, the electrically conductive member 130 is connected to the preset potential point, that is, the electrically conductive member 130 is directly grounded. When the battery works normally, the first potential signal detected by the battery management system is the potential difference between the battery assembly 200 and the vehicle ground. When the electrically conductive medium is present in the battery tray, the second potential signal detected by the battery management system is the changed potential difference between the battery assembly 200, the electrically conductive medium, and the vehicle ground. At this time, the electrically conductive member 130 acts as a grounding member and is directly connected to the vehicle ground, so that the battery tray assembly 100 has fewer parts.

According to some embodiments of the present disclosure, the tray 110 includes a grounding member that is grounded, and one end of the electrically conductive member 130 is electrically connected to the grounding member. In some embodiments, the grounding member is grounded, and the potential of the grounding member is zero. The electrically conductive member 130 has the same potential as the vehicle ground by means of the grounding member. Similarly, when the battery works normally, the first potential signal detected by the battery management system is the potential difference between the battery assembly 200 and the vehicle ground. When the electrically conductive medium is present in the battery tray, the second potential signal detected by the battery management system is the changed potential difference between the battery assembly 200, the electrically conductive medium, and the vehicle ground. At this time, the electrically conductive member 130 is grounded through the grounding member.

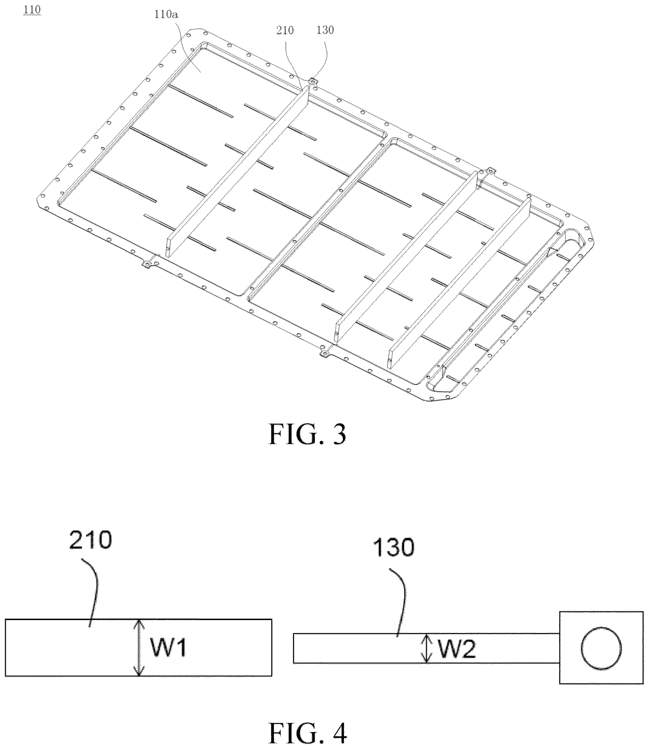

According to some embodiments of the present disclosure, as shown in FIG. 3, the tray 110 is provided with multiple electrically conductive members 130 disposed at intervals along a second direction on two sides in a first direction, in which the first direction is perpendicular to the second direction. In some embodiments, multiple electrically conductive members 130 are provided, and the multiple electrically conductive members 130 are disposed at intervals on two sides of the tray 110. When the electrically conductive medium is present in the tray 110, the electrically conductive medium will flow as the vehicle runs. When the electrically conductive medium flows between the electrically conductive member 130 and the battery assembly 200, the electrically conductive medium conducts the circuit between the battery assembly 200 and the preset potential point and a potential difference is formed. The battery management system detects the potential difference and converts it into the second potential signal, and uploads the second potential signal to the vehicle based on the change from the first potential signal and the second potential signal to inform the user of the electric leakage. The multiple distributed electrically conductive members 130 can improve the probability of detecting the electrically conductive medium, thus providing a high safety.

According to some embodiments of the present disclosure, as shown in FIG. 3, the multiple electrically conductive members 130 are symmetrically disposed in the second direction of the tray 110. In some embodiments, symmetric arrangement of the multiple electrically conductive members 130 brings aesthetic design, convenient processing, and high probability of detecting the electrically conductive medium, so the safety performance is guaranteed.

According to some embodiments of the present disclosure, as shown in FIG. 3, the multiple electrically conductive members 130 include a first electrically conductive member and a second electrically conductive member disposed at intervals in the second direction of the tray 110. The length of the tray 110 in the second direction is S, the distance from the first electrically conductive member to one end of the tray 110 is S1, and the distance from second electrically conductive member to the other end of the tray 110 is S2, and S, S1, and S2 meet: 0.15<S1/S<0.35; and 0.15<S2/S<0.35. In some embodiments, the length of the tray 110 in the second direction is S, and the first electrically conductive member and the second electrically conductive member are disposed in sequence in the second direction of the tray 110 and divide the tray 110 into three sections in the second direction. The distance from the first electrically conductive member to one end of the tray 110 is S1, and S1 and S meet 0.15<S1/S<0.35. The distance from the second electrically conductive member to the other end of the tray 110 is S2, and S2 and S meet 0.15<S2/S<0.35. The distances of the electrically conductive medium traveling to the electrically conductive members are approximately the same, so that the presence of the electrically conductive medium in the tray 110 can be detected with increased detection probability when the electrically conductive medium flows in the tray 110. In some embodiments of the present disclosure, the first electrically conductive member and the second electrically conductive member can be respectively provided at two sides of the tray 110 in the second direction, and the first electrically conductive member and the second electrically conductive member directly faces the battery assembly 200, so as to be used to detect the electrically conductive medium present in the tray 110.

In some embodiments of the present disclosure, the thickness of the electrically conductive member 130 is d, and d meets 0.1 mm<d<2 mm, which facilitates the installation on the tray 110 without affecting the thickness of the tray 110.

According to some embodiments of the present disclosure, as shown in FIG. 2, the tray 110 includes a bottom plate 111 and a side frame 112. The bottom plate 111 bears the battery assembly 200 and is configured as an insulator. The side frame 112 is disposed peripheral to the bottom plate 111, and the side frame 112 is configured as a grounding member. In some embodiments, the bottom plate 111 of the tray 110 defines the mounting space 110a for accommodating the battery assembly 200. The side frame 112 is disposed peripheral to the bottom plate 111, and the side frame 112 is grounded. The side frame 112 is fixedly connected to the bottom plate 111. The side frame 112 can be configured as a metal piece, and the side frame 112 is configured to improve the rigidity of the tray 110. The side frame 112 can be connected to the vehicle body through a grounding wire to realize the grounding of the side frame 112.

According to some embodiments of the present disclosure, as shown in FIG. 2, the battery tray assembly 100 further includes a lifting lug 120. The lifting lug 120 is connected to an outer periphery of the side frame 112, the lifting lug 120 is configured as a grounding member, and the electrically conductive member 130 is connected to the lifting lug 120. In some embodiments, the lifting lug 120 is disposed on the outer periphery of the side frame 112, and the lifting lug 120 is provided with a fixing point for connecting the battery tray to the vehicle body. The electrically conductive member 130 can brings the lifting lug 120 and the battery assembly 200 into conduction when the electrically conductive medium is present in the mounting space 110a. In some embodiments of the present disclosure, the lifting lug 120 is made of a metal material and can be conducted to the vehicle potential to realize grounding.

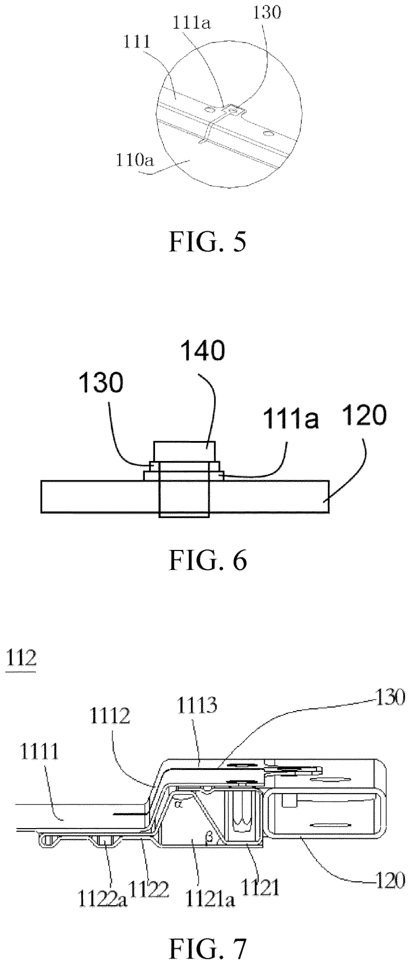

According to some embodiments of the present disclosure, as shown in FIGs. 5 to 6, an outward-protruding supporting protrusion 111a is formed on an outer periphery of the bottom plate 111, and the supporting protrusion 111a extends onto the lifting lug 120, so that the bottom plate 111 and the lifting lug 120 are lapped. A portion of the electrically conductive member 130 is provided in the mounting space 110a. The other portion of the electrically conductive member 130 is provided on the supporting protrusion 111a and electrically connected to the lifting lug 120. In some embodiments, the supporting protrusion 111a is an insulating material integrally formed with the tray 110, and the supporting protrusion 111a protrudes outward from the periphery of the bottom edge, to facilitate the connection between the lifting lug 120 and the bottom plate 111. The other portion of the electrically conductive member 130 is provided on the supporting protrusion 111a, and the electrically conductive member 130 is exposed on the surface of the supporting protrusion 111a. When the supporting protrusion 111a is lapped with the lifting lug 120, the portion of the electrically conductive member 130 exposed on the supporting protrusion 111a is in contact with and electrically connected to the lifting lug 120, whereby the electrically conductive member 130 is grounded.

In some embodiments of the present disclosure, as shown in FIG. 6, the electrically conductive member 130 can be an electrically conductive sheet and an electrically conductive bolt. A portion of the electrically conductive sheet is located on the bottom plate 111, and the portion of the electrically conductive sheet is adjacent to the mounting space 110a or located in the mounting space 110a. The other portion of the electrically conductive sheet extends onto the supporting protrusion 111a. The electrically conductive bolt extends through the supporting protrusion 111a and is pressed tightly on the other portion of the electrically conductive sheet and then screwed to the lifting lug 120, whereby the electrically conductive member 130 is grounded. In some other embodiments of the present disclosure, the electrically conductive member 130 is configured as an electrically conductive sheet. A portion of the electrically conductive sheet is located on the bottom plate 111 and adjacent to the mounting space 110a or located in the mounting space 110a. The other portion of the electrically conductive sheet extends onto the supporting protrusion 111a and provided on a bottom wall surface of the supporting protrusion 111a. When the supporting protrusion 111a is lapped with the lifting lug 120, the other portion of the electrically conductive sheet is in contact with the lifting lug 120, so that the electrically conductive member 130 is electrically connected to the lifting lug 120 to realize the grounding.

According to some embodiments of the present disclosure, as shown in FIG. 7, the bottom plate 111 includes a bottom plate body 1111, a side plate 1112 and a flanging portion 1113. The side plate 1112 is disposed peripheral to the bottom plate body 1111 and defines, together with the bottom plate body 1111, the battery assembly mounting space 110a. The flanging portion 1113 is disposed at an outer edge of the side plate 1112 and extends toward a direction away from the mounting space 110a. The flanging portion 1113 is formed with the supporting protrusion 111a. In some embodiments, the side plate 1112 is connected to the bottom plate body 1111 and the flanging portion 1113, and the bottom plate body 1111 and the side plate 1112 define the mounting space 110a. The flanging portion 1113 extends from the outer edge of the side plate 1112 toward a direction away from the mounting space 110a. A portion of the electrically conductive member 130 is provided on the bottom plate body 1111. The other portion of the electrically conductive member 130 extends along the side plate 1112 to the flanging portion 1113 and comes into contact with the supporting protrusion. Such an arrangement of the structure of the bottom plate 111 is convenient for the bearing of the battery and the installation of the electrically conductive member 130.

According to some embodiments of the present disclosure, as shown in FIG. 7, the side frame 112 includes a front beam 1123, a rear beam 1124 and a side beam 1120. The front beam 1123 and the rear beam 1124 are respectively fixed to a front side and a rear side of the side beam 1120. Two side beams 1120 are provided, which are respectively connected to the ends at the same side of the front beam 1123 and the rear beam 1124. The side beam 1120 includes an outer supporting portion 1121 and an inner supporting portion 1122. The outer supporting portion 1121 is configured to support the flanging portion 1113. The inner supporting portion 1122 has a height less than the height of the outer supporting portion 1121. The inner supporting portion 1122 is located at a side of the outer supporting portion 1121 facing the mounting space 110a. The inner supporting portion 1122 is configured to support the bottom plate body 1111. In some embodiments, the front beam 1123 is provided at a front side of the bottom plate 111, and the rear beam 1124 is provided at the periphery of the flanging portion 1113 at the rear side of the bottom plate 111. The outer supporting portion 1121 and the inner supporting portion 1122 of the side beam 1120 are disposed in sequence. The outer supporting portion 1121 supports the flanging portion 1113 at the side of the bottom plate 111, and the inner supporting portion 1122 supports the bottom plate body 1111. The outer supporting portion 1121 is higher than the inner supporting portion 1122 such that a height difference is formed between the flanging portion 1113 and the bottom plate body 1111, thereby defining the mounting space 110a of the battery. The arrangement of the inner supporting portion 1122 and the outer supporting portion 1121 can enhance the weight bearing capacity of the bottom plate 111, increase the rigidity of the bottom plate 111, and avoid the deformation of the bottom plate 111.

In some embodiments of the present disclosure, the bottom plate 111 and the side frame 112 are bonded with a structural adhesive, and the dimensional tolerance of the side frame 112 can be absorbed by controlling the thickness of the structural adhesive. Moreover, the side frame 112 has a good flatness. The manufacturing accuracy of the side frame 112 and the bottom plate 111 can be reduced by using the characteristic that the structural adhesive can absorb the dimensional tolerance.

According to some embodiments of the present disclosure, as shown in FIG. 7, the outer supporting portion 1121 is internally provided with multiple weight reducing cavities 1121a extending in the front-rear direction, and a side wall between two adjacent weight reducing cavities 1121a is disposed obliquely. In some embodiments, to reduce the weight of the side frame 112, the outer supporting portion 1121 is internally provided with multiple adjacent cavities, that is, the weight reducing cavities 1121a. The side wall between two adjacent weight reducing cavities 1121a are tilted to increase the rigidity of the outer supporting portion 1121, so as to avoid the deformation of the side frame 112 under an external force upon collision.

In some embodiments of the present disclosure, as shown in FIG. 7, a side wall inside the outer supporting portion 1121 divides the outer supporting portion 1121 into two areas. The weight reducing cavity 1121a adjacent to the inner supporting portion 1122 has a cross-sectional area of S1. The weight reducing cavity 1121a far from the inner supporting portion 1122 has a trapezoidal cross section and a cross-sectional area of S2. In a power battery system, the cross-sectional area S1 of the weight reducing cavity 1121a adjacent to the inner supporting portion 1122 has a great influence on the modal of the power battery pack. As S1 increases, the rigidity of the bottom plate 111 becomes worse, the modal of the whole pack decreases, and the probability of resonance increases. The cross-sectional area S2 of the weight reducing cavity 1121a far from the inner supporting portion 1122 has a great influence on the collision protection of the vehicle. As S2 increases, the support area of the weight reducing cavity 1121a far from the inner supporting portion 1122 decreases. The smaller the energy that can be absorbed upon collision of the vehicle with an external force is, the greater the collision safety risk will be. To achieve a balance between the modal of the whole pack and the collision protection of the vehicle, S1 and S2 meet: 0.80<Sl/S2<0.99.

In some embodiments of the present disclosure, as shown in FIG. 7, the weight reducing cavity 1121a adjacent to the inner supporting portion 1122 has a triangular cross section, the side wall inside the outer supporting portion 1121 and the weight reducing cavity 1121a define two angles that are α and β respectively, where α and β are from 50° to 70°, and the value of α and β are such that the cross section of the weight reducing cavity 1121a is an isosceles triangle, so as to improve the stability of the cross section of the weight reducing cavity 1121a.

According to some embodiments of the present disclosure, as shown in FIG. 7, multiple supporting grooves 1122a extending in the front-rear direction and disposed at intervals in a width direction are provided at a bottom of the inner supporting portion 1122. The supporting grooves 1122a are located at a lower side of the bottom plate 111. In some embodiments, the supporting groove 1122a can improve the weight bearing capacity of the inner supporting portion 1122, so that the bottom plate 111 can bear the pressure from the battery.

According to some embodiments of the present disclosure, the inner supporting portion 1122 is provided with a water reservoir. In some embodiments, the water reservoir is configured to temporarily store the electrically conductive medium in the battery pack. When the electrically conductive medium is present in the battery tray assembly 100, the electrically conductive medium can flow to and be temporarily stored in the water reservoir. The water reservoir will absorb or discharge the electrically conductive medium, to reduce the electrically conductive medium in the battery pack, reduce the risk of electric leakage due to the presence of the electrically conductive medium in the battery pack, and improve the safety performance of the battery pack.

According to some embodiments of the present disclosure, as shown in Figs. 3, 5, the electrically conductive member 130 is integrally disposed with the bottom plate 111. In some embodiments, the electrically conductive member 130 can be embedded in the bottom plate 111; and a portion of the electrically conductive member 130 is the bottom wall of the mounting space 110a, and the other portion of the electrically conductive member 130 extends from the bottom plate 111 and contacts the side frame 112, so as to be grounded. In some embodiments of the present disclosure, the electrically conductive member 130 can be hot-pressed onto the bottom plate 111 to form a current conduction path.

According to some embodiments of the present disclosure, as shown in FIGs. 5 to 6, the portion of the tray 110 bearing the battery assembly 200 is configured as an insulating member. The battery tray assembly 100 further includes an electrically conductive fastener 140. The electrically conductive fastener 140 is configured as the grounding member, and the electrically conductive fastener 140 is configured to fasten the tray 110 and the electrically conductive member 130. In some embodiments, the electrically conductive fastener 140 is electrically conductive. The electrically conductive member 130 is electrically connected to the electrically conductive fastener 140, and the electrically conductive fastener 140 fastens the other portion of the electrically conductive member 130 to the tray 110, to facilitate the installation of the electrically conductive member 130. In some embodiments of the present disclosure, the electrically conductive fastener 140 is a metal grounding bolt, and the electrically conductive member 130 is connected to the grounding member that is the electrically conductive fastener 140. The electrically conductive member 130 is formed with a first mounting hole configured for the electrically conductive fastener 140 to pass through, and a second mounting hole suitable for the electrically conductive fastener 140 to pass through is formed on the tray 110. The first mounting hole and the second mounting hole face each other, and the electrically conductive fastener 140 extends through the first mounting hole and the second mounting hole respectively and is grounded. A pressing portion having a cross section larger than the first mounting hole is formed at an upper end of the electrically conductive fastener 140, which is pressed against an upper surface of the electrically conductive member 130 to realize the electrical connection between the electrically conductive member 130 and the grounding member.

In some embodiments of the present disclosure, the electrically conductive member 130 is provided in the tray 110 and a portion of the electrically conductive member 130 is located in the mounting space 110a or adjacent to the mounting space 110a. In some embodiments, to facilitate the contact between the electrically conductive member 130 and the electrically conductive medium in the mounting space 110a, a portion of the electrically conductive member 130 can be provided in the mounting space 110a and spaced apart from the battery assembly 200. Alternatively, as shown in FIG. 3, the electrically conductive member 130 is disposed on the surface of the tray 110 and adjacent to the mounting space 110a, to facilitate the contact between the electrically conductive member 130 and the electrically conductive medium. In some embodiments of the present disclosure, a portion of the electrically conductive member 130 is located in the mounting space 110a and the portion warps or projects to contact the electrically conductive medium in the mounting space 110a, and the warping or projecting portion is spaced apart from the battery assembly 200. In some other embodiments of the present disclosure, the electrically conductive member 130 is embedded in the bottom wall or side wall of the mounting space 110a, and the surface of the electrically conductive member 130 serves as the bottom wall or side wall of the mounting space 110a, to facilitate the contact of the electrically conductive member 130 with the electrically conductive medium in the mounting space110a.

In some embodiments of the present disclosure, as shown in FIG. 3, the grounding member is fixedly connected to the tray 110, and the other portion of the electrically conductive member 130 extends from the tray 110 and is connected to the grounding member. In some embodiments, since the portion of the tray 110 bearing the battery assembly 200 is insulating and not electrically conductive, the other portion of the electrically conductive member 130 extends out of the mounting space 110a of the tray 110 and is connected to the grounding member. The grounding member is the preset potential point. The electrically conductive member 130 can conduct the potential of a detection point in the mounting space 110a to the outside of the tray 110, thus forming an equipotential body between the tray 110 and the preset potential point. When the electrically conductive medium is present in the mounting space 110a, the battery assembly 200, the electrically conductive member 130 and the preset potential point are electrically connected, so that the potential difference between the battery assembly 200 and the preset potential point can be detected.

In some embodiments of the present disclosure, the battery tray assembly 100 includes a tray 110, a grounding member, an electrically conductive member 130 and a lifting lug 120. The tray 110 includes a bottom plate 111 and a side frame 112. The side frame 112 is disposed on an outer periphery of the bottom plate 111, and the lifting lug 120 is disposed on an outer periphery of the side frame 112. Both the side frame 112 and the lifting lug 120 can be used as a grounding member. The bottom plate 111 is an insulating member and defines a mounting space 110a. A battery assembly 200 is disposed in the mounting space 110a. The electrically conductive member 130 is hot-pressed onto the bottom plate 111 to form a current conduction path. The bottom plate 111 includes a bottom plate body 1111, a side plate 1112 and a flanging portion 1113. The flanging portion 1113 is higher than the bottom plate body 1111. The side plate 1112 is tilted and connected to the bottom plate body 1111 and the flanging portion 1113. A supporting protrusion 111a is formed on an outer periphery of the flanging portion 1113. The electrically conductive member 130 extends onto the supporting protrusion 111a. A second mounting hole is formed in the supporting protrusion 111a. The side frame 112 includes a front beam 1123, a rear beam 1124 and a side beam 1120. The side beam 1120 includes an outer supporting portion 1121 and an inner supporting portion 1122. The outer supporting portion 1121 supports the flanging portion 1113, and the inner supporting portion 1122 supports the bottom plate body 1111. The outer supporting portion 1121 is internally provided with two weight reducing cavities 1121a, and the inner supporting portion 1122 is internally provided with a water reservoir and a supporting groove 1122a disposed in sequence. A first mounting hole is formed in a portion of the electrically conductive member 130 in contact with the supporting protrusion 111a. A third mounting hole is formed in the lifting lug 120. An electrically conductive fastener 140 extends through the three mounting holes to mount and electrically connect the electrically conductive member 130 to the lifting lug 120 of the tray 110. The electrically conductive member 130 conducts the potential in the mounting space 110a to the lifting lug 120, to form an equipotential body. The multiple electrically conductive members 130 are evenly distributed on two sides of the bottom plate 111 in the length direction. In some embodiments, two electrically conductive members 130 are respectively disposed on both sides of the bottom plate 111 in the length direction, and the electrically conductive members 130 on the two sides are symmetrical.

When no electrically conductive medium is present in the mounting space 110a, a battery management system detects a potential difference between the battery assembly 200 and the preset potential point and converts it into a first potential signal. When the electrically conductive medium is present in the mounting space 110a, the electrically conductive medium will flow as the vehicle runs. When the electrically conductive medium flows between the electrically conductive member 130 and the battery assembly 200, the electrically conductive medium conducts the circuit between the battery assembly 200 and the electrically conductive member 130 and a new potential difference is formed. The battery management system detects that the potential difference changes and converts the detected potential difference into a second potential signal. The battery management system detects that the first potential signal changes to the second potential signal and reports it to the vehicle, and finally reports that the electrically conductive medium is present in the battery, causing electric leakage. Moreover, the electrically conductive medium in the tray 110 flows into the water reservoir.

By providing the electrically conductive member 130 in the battery tray assembly 100 according to the present disclosure, the electric leakage fault of the battery pack can be reported in time when the electrically conductive medium is present in the mounting space 110a where the battery assembly 200 is mounted, to avoid other potential safety hazards.

The battery pack according to the present disclosure will be described briefly below.

The battery pack according to the present disclosure includes: a battery tray, a battery assembly 200 and a battery management system. The battery tray is configured as a battery tray assembly 100 according to any one of the above embodiments. The battery assembly 200 is provided in mounting space 110a. When no electrically conductive medium is present in the mounting space 110a, a first potential signal is formed between the battery assembly 200 and the preset potential point. When the electrically conductive medium is present in the mounting space 110a, a second potential signal is formed between the battery assembly 200 and the preset potential point. The first potential signal and the second potential signal are used to characterize whether the electrically conductive medium is present in the mounting space 110a. In some embodiments, the battery tray defines the mounting space110a configured to mount the battery assembly 200. When no electrically conductive medium is present in the battery pack, the first potential signal is formed between the battery assembly 200 and the preset potential point. When the electrically conductive medium is present in the battery pack, the battery assembly 200, the electrically conductive medium, the electrically conductive member 130 and the preset potential point form a current conduction path. The potential difference between the battery assembly 200 and the preset potential point changes, and the second potential signal is formed. Both the first potential signal and the second potential signal can be transmitted to the vehicle. Whether the electrically conductive medium is present in the battery pack can be determined by determining the change of the potential signal. Since the battery pack of the present disclosure has the battery tray as described above, the battery pack can find out the electric leakage caused by water accumulation or electrolyte leakage in the battery in time, and has good safety performance.

According to some embodiments of the present disclosure, as shown in FIGs. 2 to 3, the battery pack further includes a battery management system. The battery management system is configured to detect a potential signal between the battery assembly 200 and the preset potential point, to detect whether the electrically conductive medium is present in the battery pack. When the battery pack works normally, the battery management system converts the detected potential difference into the first potential signal. When the electrically conductive medium is present in the battery pack, the potential difference between the battery assembly 200 and the preset potential point changes from the first potential signal to the second potential signal, and the battery management system detects the change and transmits it to the vehicle. Accordingly, the user can find out the electric leakage of the battery pack due to internal water accumulation or electrolyte leakage in time.

According to some embodiments of the present disclosure, as shown in FIGs. 2 to 3, the battery assembly 200 includes multiple cell cores 210 and the multiple cell cores 210 are disposed at intervals in a second direction, and the electrically conductive member 130 directly faces one of the cell cores 210 in a first direction of the battery tray. In some embodiments, to avoid short-circuiting caused by the conduction of two cell cores 210 by the electrically conductive member 130 after 1 collision of the vehicle, one electrically conductive member 130 is disposed to directly face one cell core 210, thus improving the safety performance of the battery assembly 200.

According to some embodiments of the present disclosure, as shown in FIGs. 3 to 4, the cell core 210 in the battery assembly 200 has a width W1 in the second direction, the electrically conductive member 130 has a width W2 in the second direction, and W1 and W2 meet 0.25<W2/W1<0.98. In some embodiments, in case of a too small width, the electrically conductive member 130 is difficult to be processed, so the ratio of W2 to W1 needs to meet 0.25<W2/W1. In case of a too large width, the width of the electrically conductive member 130 in the second direction will be greater than the width of the cell core 210 in the second direction, causing short-circuiting due to the fact that the electrically conductive member 130 will conduct adjacent cell cores 210 to form a circuit when the vehicle is collided from the side. Therefore, the ratio of W2 to W1 should also meet W2/W1 < 0.98.

According to some embodiments of the present disclosure, a housing of the cell core 210 in the battery assembly 200 is charged; or the battery assembly 200 is provided with a terminal lead-out member, and the terminal lead-out member is connected to a terminal of the cell core 210 and extends into the mounting space 110a. In some embodiments, for detecting whether electric leakage occurs to the battery, the housing of the cell core 210 can be disposed to be charged or the terminal of the cell core 210 is disposed to be led into the mounting space 110a, so that when the electrically conductive medium is present in the mounting space 110a, the electrically conductive member 130 can conduct a high-voltage loop formed by the cell cores 210 with the grounding member. In this way, the electric leakage detection of the battery is realized.

In some embodiments of the present disclosure, as shown in FIG. 1, an insulating resistor R0 is provided between the battery assembly 200 and the grounding member. The electrically conductive medium is electrically conductive and has an electrically conductive medium resistor R1. The electrically conductive member 130 is electrically conductive and has an electrically conductive member resistor R2. The resistance of the insulating resistor R0 is far greater than the sum of the resistance of the electrically conductive medium resistor R1 and the electrically conductive member resistor R2. When no electrically conductive medium is present between the battery assembly 200 and the tray 110, there is no electrical connection between the battery assembly 200 and the tray 110. At this time, the battery management system detects the potential difference between two ends of R0, which is the potential difference between the battery assembly 200 and the grounding member. The battery management system converts the potential difference into a first potential signal and transmits it to the vehicle.

When the electrically conductive medium is present between the battery assembly 200 and the tray 110, electrically conductive medium brings the battery assembly 200 and the electrically conductive member 130 into electrical connection. At this time, the potential difference detected by the battery management system is the potential difference between the electrically conductive medium resistor R1 and the electrically conductive member resistor R2. Since the sum of the resistance of the electrically conductive medium resistor R1 and the electrically conductive member resistor R2 is obviously lower than that of the insulating resistor R0, the potential difference detected by the battery management system changes. The battery management system converts the potential difference into a second potential signal and transmits it to the vehicle, so as to warn the user of electric leakage of the battery pack.

The vehicle 1 of the present disclosure will be described briefly below.

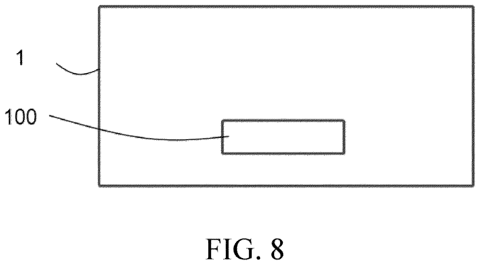

As shown in FIG. 8, the vehicle 1 according to the present disclosure includes the battery pack according to any one of the above embodiments. Since the vehicle 1 according to the present disclosure is provided with the battery pack described in the above embodiment, the vehicle 1 can give an alarm in case of a situation that the battery pack contains a leaked electrolyte solution or accumulated water, so that a user can find out the problem in time, to avoid safety accidents.

In summary, the battery tray assembly 100 according to the present disclosure can find out the electric leakage of the battery caused by the accumulated water or leaked electrolyte solution present in the battery tray in time. The battery pack and vehicle having the battery tray assembly 100 of the present disclosure have higher safety. Multiple electrically conductive members 130 are evenly distributed on the tray 110, to improve the probability of monitoring the electrically conductive medium in running vehicles 1, and ensure the driving safety. The electrically conductive member 130 and the tray 110 are integrally formed, and the production of the electrically conductive member 130 and the tray 110 can be accomplished by hot pressing the electrically conductive member 130 on the existing tray 110 structure, so that the processing is convenient. The side frame 112 of the tray 110 is provided with the inner supporting portion 1122 and the outer supporting portion 1121, so that the bearing capacity of the bottom plate 111 is improved, the rigidity of the bottom plate 111 is increased, the deformation of the bottom plate 111 is avoided, and the overall stability of the tray assembly is improved. The battery tray assembly 100 is provided with a water reservoir to buffer the electrically conductive medium in the battery pack, so as to prevent the internal electric leakage of the battery pack and improve the safety performance of the battery pack.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. A battery tray assembly (100), comprising:
a tray (110), the tray (110) defining a mounting space (110a) configured to accommodate a battery assembly (200) and the tray (110) being electrically isolated from the battery assembly (200); and
an electrically conductive member (130), the electrically conductive member (130) being provided in the tray (110) and at least partially located in the mounting space (110a), and one end of the electrically conductive member (130) being configured to be connected to a preset potential point;
when no electrically conductive medium is present in the mounting space (110a), the electrically conductive member (130) being configured to provide a first potential signal between the battery assembly (200) and the preset potential point;
when the electrically conductive medium is present in the mounting space (110a), the electrically conductive member (130) bringing the battery assembly (200) and the preset potential point into conduction by means of the electrically conductive medium, to provide a second potential signal between the battery assembly (200) and the preset potential point; and
the first potential signal and the second potential signal being used to characterize whether the electrically conductive medium is present in the mounting space (110a).

2. The battery tray assembly (100) according to claim 1, wherein the preset potential point is configured as a vehicle ground.

3. The battery tray assembly (100) according to claim 1 or 2, wherein the tray (110) comprises a grounding member, the grounding member being grounded, and one end of the electrically conductive member (130) being electrically connected to the grounding member.

4. The battery tray assembly (100) according to any one of claims 1 to 3, wherein the tray (110) is provided with a plurality of electrically conductive members (130) disposed at intervals along a second direction on two sides in a first direction, wherein the first direction is perpendicular to the second direction.

5. The battery tray assembly (100) according to any one of claims 1 to 4, wherein the plurality of electrically conductive members (130) are symmetrically disposed in the second direction of the tray (110).

6. The battery tray assembly (100) according to any one of claims 1 to 5, wherein the electrically conductive members (130) comprises a first electrically conductive member (130) and a second electrically conductive member (130) disposed at intervals in the second direction of the tray (110), wherein
the length of the tray (110) in the second direction is S, the distance from the first electrically conductive member (130) to one end of the tray (110) is S1, and the distance from the second electrically conductive member (130) to the other end of the tray (110) is S2, and S, S1, and S2 meet: 0.15<S1/S<0.35; and 0.15<S2/S<0.35.

7. The battery tray assembly (100) according to any one of claims 1 to 6, wherein the tray (110) comprises:
a bottom plate (111), the bottom plate (111) bearing the battery assembly (200) and being configured as an insulator; and
a side frame (112), the side frame (112) being disposed peripheral to the bottom plate (111), and the side frame (112) being configured as the grounding member.

8. The battery tray assembly (100) according to any one of claims 1 to 7, further comprising: a lifting lug (120), the lifting lug (120) being connected to an outer periphery of the side frame (112) and configured as the grounding member, and the electrically conductive member (130) being connected to the lifting lug (120).

9. The battery tray assembly (100) according to any one of claims 1 to 8, wherein an outward-protruding supporting protrusion (111a) is formed on an outer periphery of the bottom plate (111), the supporting protrusion (111a) extending onto the lifting lug (120), and at least a portion of the electrically conductive member (130) being provided on the supporting protrusion (111a) and electrically connected to the lifting lug (120).

10. The battery tray assembly (100) according to any one of claims 1 to 9, wherein the bottom plate (111) comprises:
a bottom plate body (1111);
a side plate (1112), the side plate (1112) being disposed peripheral to the bottom plate body (1111) and defining, together with the bottom plate body (1111), the battery assembly (200) mounting space (110a); and
a flanging portion (1113), the flanging portion (1113) being disposed at an outer edge of the side plate (1112) and extending toward a direction away from the mounting space (110a), and the flanging portion (1113) being formed with the supporting protrusion (111a).

11. The battery tray assembly (100) according to any one of claims 1 to 10, wherein the side frame (112) comprises:
a front beam (1123) and a rear beam (1124), the front beam (1123) and the rear beam (1124) being disposed opposite to each other; and
a side beam (1120), two side beams (1120) being provided, each of the side beams (1120) being connected to the front beam (1123) and the rear beam (1124), and the two side beams (1120) being respectively provided at two ends of the front beam (1123) and the rear beam (1124); wherein
the side beam (1120) comprises:
an outer supporting portion (1121), the outer supporting portion (1121) being configured to support the flanging portion (1113);
an inner supporting portion (1122), the inner supporting portion (1122) having a height less than the height of the outer supporting portion (1121), the inner supporting portion (1122) being located at a side of the outer supporting portion (1121) facing the mounting space (110a), and the inner supporting portion (1122) being configured to support the bottom plate body (1111).

12. The battery tray assembly (100) according to any one of claims 1 to 11, wherein the outer supporting portion (1121) is internally provided with a plurality of weight reducing cavities (1121a) extending in a front-rear direction, and a side wall between two adjacent weight reducing cavities (1121a) is disposed obliquely.

13. The battery tray assembly (100) according to any one of claims 1 to 12, wherein a plurality of supporting grooves (1122a) extending in the front-rear direction and disposed at intervals in a width direction are provided at a bottom of the inner supporting portion (1122), the supporting grooves (1122a) being located at a lower side of the bottom plate (111).

14. The battery tray assembly (100) according to any one of claims 1 to 13, wherein the inner supporting portion (1122) is provided with a water reservoir.

15. The battery tray assembly (100) according to any one of claims 1 to 14, wherein the electrically conductive member (130) is integrally disposed with the bottom plate (111).

16. The battery tray assembly (100) according to any one of claims 1 to 15, wherein the tray (110) is an insulating member, the battery tray assembly (100) further comprising:
an electrically conductive fastener (140), the electrically conductive fastener (140) being configured as the grounding member, and the electrically conductive fastener (140) being configured to fasten the tray (110) and the electrically conductive member (130).

17. A battery pack, comprising:
a battery tray, the battery tray being configured as a battery tray assembly (100) according to any one of claims 1 to 16;
a battery assembly (200), the battery assembly (200) being provided in the mounting space (110a), when no electrically conductive medium is present in the mounting space (110a), a first potential signal being formed between the battery assembly (200) and the preset potential point; and when the electrically conductive medium is present in the mounting space (110a), a second potential signal being formed between the battery assembly (200) and the preset potential point, the first potential signal and the second potential signal being used to characterize whether the electrically conductive medium is present in the mounting space (11a).

18. The battery pack according to claim 17, further comprising: a battery management system, the battery management system being configured to detect a potential signal between the battery assembly (200) and the preset potential point, to detect whether the electrically conductive medium is present in the battery pack.

19. The battery pack according to claim 17 or 18, wherein the battery assembly (200) comprises a plurality of cell cores (210), and the electrically conductive member (130) is disposed directly facing one of the cell cores (210) in a first direction of the battery tray.

20. The battery pack according to any one of claims 17 to 19, wherein the cell core (210) in the battery assembly (200) has a width W1 in the second direction, the electrically conductive member (130) has a width W2 in the second direction, and W1 and W2 meet 0.25<W2/W1<0.98.

21. The battery pack according to any one of claims 17 to 20, wherein a housing of the cell core (210) in the battery assembly (200) is charged; or
the battery assembly (200) is provided with a terminal lead-out member, the terminal lead-out member being connected to a terminal of the cell core (210) and extending into the mounting space (110a).

22. A vehicle (1), comprising a battery pack according to any one of claims 17 to 21.
